# EUROPÄISCHE PATENTSCHRIFT

(11) **EP 0 583 539 B1**
(45) Veröffentlichungstag und Bekanntmachung des Hinweises auf die Patenterteilung: **07.02.1996**
(21) Anmeldenummer: 93103264.3
(22) Anmeldetag: 02.03.1993
(51) Int. Cl.: H01R 25/16

(54) **Montageelement für Elektro-Installationskanäle**
Mounting element for electrical installation channel
Elément de montage pour canaux d'installation électrique

(30) Priorität: 09.03.1992 DE 9203064 U
(43) Veröffentlichungstag der Anmeldung: 23.02.1994
(73) Patentinhaber: Tehalit GmbH, D-67716 Heltersberg (DE)
(72) Erfinder: Mayer,Hans, W-6791 Bann (DE); Scherer,Peter,Dipl.-Ing.(FH), W-6607 Quierschied (DE)
(74) Vertreter: Patentanwälte Dipl.-Ing. F.W. Möll Dipl.-Ing. H.Ch. Bitterich

(56) Entgegenhaltungen:
- DE-A- 2 539 299
- DE-A- 3 507 896

## Beschreibung

Die Erfindung betrifft Montageelemente zum lösbaren Befestigen von Leitungsschutzautomaten und dergleichen in Elektro-Installationskanälen, die an ihrer Rückwand eine Längsnut mit etwa T-förmigem Querschnitt besitzen, gemäß dem Oberbegriff des Anspruchs 1. Derartige Montageelemente, die beispielsweise vier oder neun Leitungsschutzautomaten aufnehmen können, sind handelsüblich.

Wesentliche Aufgabe dieser Montageelemente ist es, die Leitungsschutzautomaten schnell, sicher, dauerfest und trotzdem lösbar sowie jederzeit sichtbar und betätigbar in Elektro-Installationskanälen befestigen zu können. Bedingt durch die vorgegebene Baugröße der Leitungsschutzautomaten einerseits und die Zahl und Stärke der an die Leitungsschutzautomaten anzuschließenden Kabel und Drähte andererseits haben diese handelsüblichen Montageelemente einen Querschnitt, welcher den für weitere Leitungen zur Verfügung stehenden freien Kanalquerschnitt erheblich reduziert.

Da die Elektro-Installationskanäle durch eingehängte isolierende Trennwände üblicherweise in wenigstens zwei Abteile unterteilt sind und elektrische Leitungen aus allen Abteilen an die Leitungsschutzautomaten angeschlossen werden, besitzen die handelsüblichen Montageelemente an jeder Stirnseite wenigstens zwei Leitungseinführungsöffnungen und zwei Zugentlastungen, obwohl immer nur eine davon benötigt wird.

Schließlich ist die Verdrahtung der handelsüblichen Montageelemente einigermaßen umständlich, weil die Anschlußklemmen für die N-Leiter (N = neutral) an der einen Stirnseite, für die PE-Leiter (PE = protective earth) dagegen an der anderen Stirnseite positioniert sind, so daß der Monteur auf der Baustelle die Leitungsenden umständlich konfektionieren muß.

Der vorliegenden Erfindung liegt daher die Aufgabe zugrunde, das Montageelement der eingangs genannten Art dahingehend zu verbessern, daß sowohl sein Querschnitt als auch der Arbeits- und Zeitaufwand beim Anschließen der elektrischen Leitungen reduziert wird.

Diese Aufgabe wird gelöst durch ein Montageelement mit den Merkmalen des Anspruchs 1.

Die Reduzierung des Querschnitts ergibt sich dank der hochkant stehenden Leiterbrücken. Die Breite des kompletten Montageelements übersteigt die durch die Leitungsschutzautomaten vorgegebenen Werte nur noch um wenige Millimeter. In der Praxis ist die Leiterbrücke zusätzlich durch einen Isolierstreifen mit C-förmigem Querschnitt abgedeckt.

Dank der an die Leiterbrücken angeformten Klemmfelder, von denen je eines je einer Stirnseite zugeordnet ist, ist es möglich, alle anzuschließenden Leitungsenden gleich lang abzuschneiden, was den Montageaufwand auf der Baustelle reduziert.

Die Klemmfelder sitzen vorzugsweise in einer passenden Vertiefung im Unterteil und sind so gegen Verdrehen beim Anziehen bzw. Lösen der Klemmschrauben gesichert.

Dank einer vorteilhaften Weiterbildung der Erfindung durch asymmetrische Anordnung je einer Kabeleinführungsöffnung an beiden Stirnseiten, können durch einfaches Wenden des Unterteils Leitungen aus beiden Abteilen des Elektroinstallationskanals an die Leitungsschutzautomaten angeschlossen werden, ohne daß die Trenn-Isolierung zwischen den beiden Kanalabteilen durchbrochen werden muß.

Zur leichten Befestigung des das Unterteil haubenartig übergreifenden Oberteils sind an den Zugentlastungen spezielle Oberteilhalter angeformt. Auf diese wird das Oberteil aufgesetzt und mit Schrauben fixiert.

Dank der Ausbildung von Unterteil aber auch Oberteil als Wanne besitzen diese eine nicht unbeträchtliche Form-Eigenstabilität. Es besteht daher die Möglichkeit, Unterteil und Oberteil als tiefgezogene Kunststoffteile auszubilden.

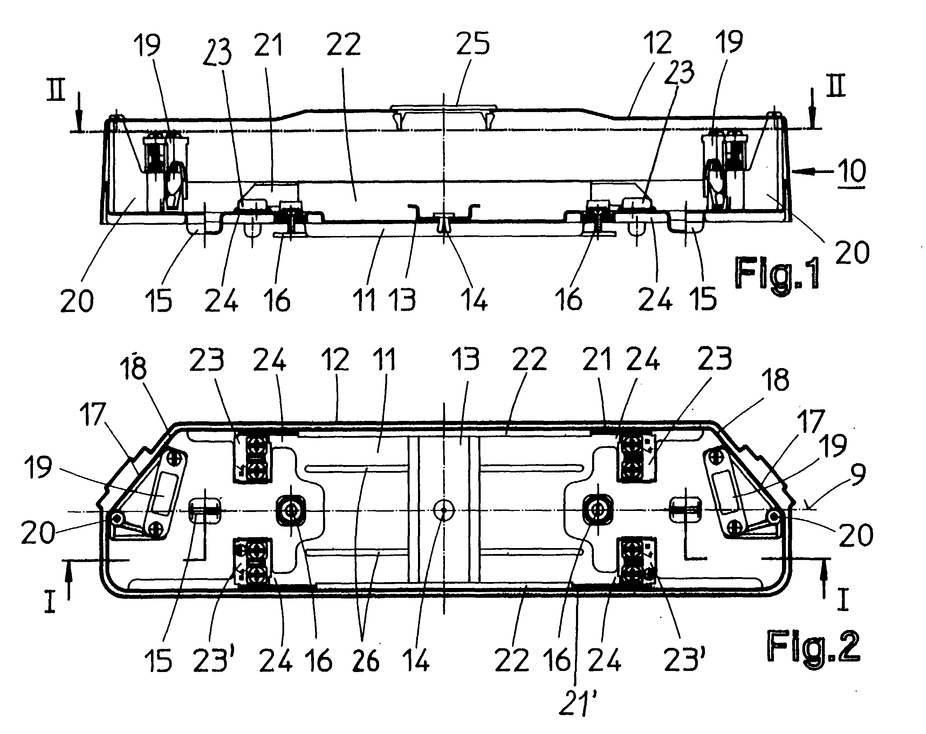

Anhand der Zeichnung soll die Erfindung in Form eines Ausführungsbeispiels näher erläutert werden. Es zeigen
- Fig. 1: einen Längsschnitt durch ein Montageelement entlang der Linie I-I in Fig. 2 und
- Fig. 2: einen anderen Längsschnitt durch das Montageelement entlang der Linie II-II in Fig. 1.

Die Zeichnung zeigt ein Montageelement 10 zur Befestigung von Leitungsschutzautomaten in Elektroinstallationskanälen. Es besteht aus einem wannenartigen Unterteil 11 und einem ebenso wannenartigen, das Unterteil 11 übergreifenden Oberteil 12. Unterteil 11 und Oberteil 12 können aus tiefgezogener Kunststoffolie bestehen. Das Unterteil 11 besitzt Führungsnocken 15, Stütznocken 26 und Klemmuttern 16, mit deren Hilfe es im Elektroinstallationskanal montiert wird. Das Oberteil 12 besitzt eine zentrale öffnung, durch die die Köpfe der Leitungsschutzautomaten (nicht dargestellt) hindurchragen und die bei Bedarf mit Abdeckstreifen 25 verschlossen werden kann.

Zur Befestigung der Leitungsschutzautomaten ist eine Rastschiene 13 vorgesehen, die mittels Spreizniet 14 am Unterteil 11 fixiert ist.

An beiden Stirnwänden 18 des Unterteils 11 ist je eine Leitungseinführungsöffnung 17 vorgesehen, wobei beide Leitungseinführungsöffnungen 17 von der Mittelebene 9 aus gesehen zur selben Seitenwand hin asymmetrisch verschoben sind. Dadurch ist es durch einfaches Wenden des Montageelements 10 möglich, Leitungen aus beiden Abteilen des Elektroinstallationskanals einzuführen, ohne die in der Mittelebene 9 liegende elektrische Isolierung zu durchbrechen.

Die Stirnwände 18 sind im Bereich der Kabeleinführungsöffnung 17 unter einem Winkel von ca. 45 bis 60 Grad zur Mittelebene abgeschrägt, damit die Kabeleinführungsöffnungen 17 breiter gemacht werden können, ohne das Montageelement 10 verbreitern zu müssen. Weiterer Platz wird gewonnen dadurch, daß die Oberteilhalter 20 so weit zur Seite gerückt sind, daß sie die Mittelebene 9 nur tangieren. Damit bleibt auch die in der Mittelebene 9 liegende Isolierung erhalten.

Jeder Leitungseinführungsöffnung 17 ist eine Zugentlastung 19 zugeordnet. Diese wird im einfachsten Fall auf das Unterteil 11 geklebt.

An die Zugentlastungen 19 einstückig angeformt erkennt man je einen Oberteilhalter 20 zur Befestigung des Oberteils 12.

Jeder Stirnwand 18 oder besser gesagt jedem stirnwandseitigen Anschlußraum zugeordnet erkennt man Klemmfelder 23, 23', die in je einer Vertiefung 24 im Unterteil 11 verdrehsicher gehalten sind. Diese Klemmfelder 23, 23' sind untereinander einstückig verbunden über Leiterbrücken 21, 21', die hochkant stehend an der Seitenwand des Unterteils 11 montiert und mit Hilfe je eines C-förmigen Isolierstreifens 22 isoliert sind. Dank dieser äußerst platzsparenden Anordnung der Leiterbrücken 21 wird das ganze Montageelement 10 nur wenig breiter als die durch die Breite der Leitungsschutzautomaten vorgegebene Länge der Rastschiene 13. Auch entfällt die Notwendigkeit, PE- bzw. N-Leiter vom einen Anschlußraum zum anderen Anschlußraum durchzuziehen, wodurch die Arbeit des Elektromonteurs an der Baustelle erheblich vereinfacht und beschleunigt wird.

Insgesamt ergibt die Summe aller Merkmale ein handliches, schlankes, funktionales Montageelement für Leitungsschutzautomaten in Elektroinstallationskanälen.

## Patentansprüche

1. Montageelement (10) zum lösbaren Befestigen von Leitungsschutzautomaten und dergleichen in Elektro-Installationskanälen, die an ihrer Rückwand eine Längsnut mit etwa T-förmigem Querschnitt besitzen, umfassend ein Unterteil (11) mit wenigstens einer Befestigungsvorrichtung (16) zum Fixieren des Unterteils (11) in der Längsnut, mit Kabeleinführungsöffnungen (17) an den Stirnwänden (18), mit je einer Zugentlastung (19) an den Kabeleinführungsöffnungen (17), mit einer Tragschiene (13) für die Leitungsschutzautomaten und dergleichen und mit Klemmleisten für Neutralleiter (N) bzw. Schutzerde (PE) und weiter umfassend ein aufsetzbares Oberteil (12) mit einer öffnung für die Leitungsschutzautomaten, dadurch gekennzeichnet, daß das Unterteil (11) als Wanne ausgebildet ist, daß die Klemmleisten als Leiterbrücke (21, 21') mit zwei angeformten Klemmfeldern (23, 23') ausgebildet sind, wobei je eines der Klemmfelder (23, 23') je einem Anschlußraum im Bereich je einer Stirnwand (18) zugeordnet ist, und daß die Leiterbrücken (21, 21') hochkant stehend an der Seitenwand des Unterteils (11) montiert sind.

2. Montageelement nach Anspruch 1, dadurch gekennzeichnet, daß die Klemmfelder (23, 23') in einer passenden Vertiefung (24) im Unterteil (11) sitzen.

3. Montageelement nach Anspruch 1 oder 2, dadurch gekennzeichnet, daß die Leiterbrücke (21, 21') mit einem C-förmigen Isolierstreifen (22) abgedeckt ist.

4. Montageelement nach einem der Ansprüche 1 bis 3, dadurch gekennzeichnet, daß an der Zugentlastung (19) ein Oberteilhalter (20) angeformt ist.

5. Montageelement nach einem der Ansprüche 1 bis 4, dadurch gekennzeichnet, daß Unterteil (11) und/oder Oberteil (12) tiefgezogene Kunststoffteile sind.

6. Montageelement nach einem der Ansprüche 1 bis 5, dadurch gekennzeichnet, daß nur eine Kabeleinführungsöffnung (17) an jeder Stirnwand (18) vorgesehen ist und daß beide Kabeleinführungsöffnungen (17) von der Mittelebene (9) aus asymmetrisch zur selben Seitenwand hin verschoben sind.

7. Montageelement nach Anspruch 6, dadurch gekennzeichnet, daß die Kabeleinführungsöffnung (17) unter einem Winkel von ca. 46 bis 60 Grad gegen die Mittelebene (9) geneigt ist.

8. Montageelement nach einem der Ansprüche 1 bis 7, dadurch gekennzeichnet, daß die Stirnwand (18) im Bereich der Kabeleinführungsöffnung (17) abgeschrägt ist.

9. Montageelement nach einem der Ansprüche 4 bis 8, dadurch gekennzeichnet, daß der Oberteilhalter (20) so positioniert ist, daß er die Mittelebene (9) tangiert.

## Claims

1. Mounting element (10) for securing automatic cut-outs and the like in a removable manner in electrical installation ducts, which have a longitudinal slot with an approximately T-shaped cross section in their back wall, comprising a bottom part (11) with at least one securing device (16) for fixing the bottom part (11) in the longitudinal slot, with cable entry openings (17) in the end walls (18), with a respective strain relief (19) at the cable entry openings (17), with a support rail (13) for the automatic cut-outs and the like and with terminal strips for neutral conductors (N) and a protective earth (PE), and also comprising an attachable top part (12) with an opening for the automatic cut-outs, characterised in that the bottom part (11) is formed as a trough, that the terminal strips are formed as connecting posts (21, 21') with two moulded-on terminal sections (23, 23'), each of the terminal sections (23, 23') being associated with a respective wiring space in the region of each end wall (18), and that the connecting posts (21, 21') are mounted edgewise at the lateral wall of the bottom part (11).

2. Mounting element according to claim 1, characterised in that the terminal sections (23, 23') are seated in a matching recess (24) in the bottom part (11).

3. Mounting element according to claim 1 or 2, characterised in that the connecting posts (21, 21') are covered by a C-shaped insulating strip (22).

4. Mounting element according to one of claims 1 to 3, characterised in that a top part holder (20) is moulded onto the strain relief (19).

5. Mounting element according to one of claims 1 to 4, characterised in that the bottom part (11) and/or the top part (12) is/are (a) deep-drawn plastic part(s).

6. Mounting element according to one of claims 1 to 5, characterised in that just one cable entry opening (17) is provided in each end wall (18), and that both cable entry openings (17) are disposed asymmetrically away from the centre plane (9) towards the same lateral wall.

7. Mounting element according to claim 6, characterised in that the cable entry opening (17) is inclined at an angle of approximately 46 to 60 degrees towards the centre plane (9).

8. Mounting element according to one of claims 1 to 7, characterised in that the end wall (18) is bevelled in the region of the cable entry opening (17).

9. Mounting element according to one of claims 4 to 8, characterised in that the top part holder (20) is positioned such that it is touching the centre plane (9).

## Revendications

1. Elément de montage (10) pour la fixation amovible d'interrupteurs automatiques de protection de ligne et analogues dans des conduits d'installation électrique qui possèdent, sur leur paroi arrière, une rainure longitudinale à section approximativement en forme de T, comprenant une partie inférieure (11) avec au moins un dispositif de fixation (16) pour fixer en position la partie inférieure (11) dans la rainure longitudinale, avec des ouvertures d'introduction de câble (17) dans les parois frontales (18), avec un dispositif respectif de soulagement de traction (19) associé aux ouvertures d'introduction de câble (17), avec un rail porteur (13) pour les interrupteurs automatiques de protection de ligne et analogues, et avec des réglettes de bornes respectivement pour des conducteurs neutres (N) ou des conducteurs de mise à la terre (PE), et comprenant en outre une partie supérieure (12) pouvant être posée sur la partie inférieure et possédant une ouverture pour les interrupteurs automatiques de protection de ligne, **caractérisé** en ce que la partie inférieure (11) est réalisée en forme de cuvette, en ce que les réglettes de bornes sont réalisées sous la forme de ponts conducteurs (21, 21') sur lesquels sont formés deux groupes de bornes (23, 23'), une chambre de connexion respective dans la région d'une paroi frontale respective (18) étant associée à chacun des groupes de bornes (23, 23'), et en ce que les ponts conducteurs (21, 21') sont montés debout sur la paroi latérale de la partie inférieure (11).

2. Elément de montage selon la revendication 1, **caractérisé** en ce que les groupes de bomes (23, 23') sont logés dans un renfoncement adapté (24) pratiqué dans la partie inférieure (11).

3. Elément de montage selon la revendication 1 ou 2, **caractérisé** en ce que les ponts conducteurs (21, 21') sont recouverts d'une baguette isolante (22) en forme de C.

4. Elément de montage selon l'une quelconque des revendications 1 à 3, **caractérisé** en ce qu'un support de partie supérieure (20) est formé sur le dispositif de soulagement de traction (19).

5. Elément de montage selon l'une quelconque des revendications 1 à 4, **caractérisé** en ce que la partie inférieure (11) et/ou la partie supérieure (12) sont des pièces en matière plastique emboutie.

6. Elément de montage selon l'une quelconque des revendications 1 à 5, **caractérisé** en ce qu'une seule ouverture d'introduction de câble (17) est prévue sur chaque paroi frontale (18), et en ce que les deux ouvertures d'introduction de câble (17) sont décalées asymétriquement par rapport au plan médian (9), vers la même paroi latérale.

7. Elément de montage selon la revendication 6, **caractérisé** en ce que l'ouverture d'introduction de câble (17) est inclinée sous un angle d'environ 46 à 60 degrés par rapport au plan médian (9).

8. Elément de montage selon l'une quelconque des revendications 1 à 7, **caractérisé** en ce que la paroi frontale (18) est chanfreinée dans la région de l'ouverture d'introduction de câble (17).

9. Elément de montage selon l'une quelconque des revendications 4 à 8, **caractérisé** en ce que le support de partie supérieure (20) est positionnée de telle sorte qu'il est tangent au plan médian (9).
